# EUROPEAN PATENT APPLICATION

(11) **EP 2 591 941 A1**
(43) Date of publication of application: **15.05.2013**
(21) Application number: 11803594.8
(22) Date of filing: 05.07.2011
(51) Int. Cl.: B60K 23/04, F16H 48/12

(54) **DEVICE FOR CONTROLLING TORQUE DISTRIBUTION TO LEFT AND RIGHT WHEELS ON A VEHICLE**

(30) Priority: 09.07.2010 JP 2010156661
(71) Applicant: Nissan Motor Co., Ltd, Yokohama-shi, Kanagawa 221-0023 (JP)
(72) Inventor: SUZUKI Shinichi, Yokohama-shi Kanagawa 221-0023 (JP)
(74) Representative: Giovannini, Francesca
(86) International application number: PCT/JP2011/065394
(87) International publication number: WO 2012/005260

(57) **Abstract**

A calculating section 43 finds a left-right rear wheel drive force difference transient control computation value dd Δ TcLR, which is a basic target value for a turning response transiently requested by a driver through a steering speed at current wheel speeds Vw (vehicle speed). A computing section 45 finds a left-right drive force difference transient control gain *α* based on a target yaw rate change rate dtφ such that the control gain *α* is smaller than 1 in a high target yaw rate change rate region. The computing value dd Δ TcLR is multiplied by the control gain *α* to calculate a left-right rear wheel drive force difference transient control amount d Δ TcLR and the same control amount is contributed to a left-right wheel drive force distribution control. As a result, during high-speed steering when the yaw rate gain tends to increase, the left-right drive force difference transient control amount is revised to a decreased value such that the transient control amount causes less of an increase in the yaw rate. In this way, the vehicle behavior can be prevented from becoming unstable.

## Description

### TECHNICAL FIELD

The present invention relates to a proposal for improving a left-right wheel drive force distribution control apparatus that is useful for a vehicle, particularly a four-wheel drive vehicle.

### BACKGROUND ART

Patent Document 1 presents an example of a conventional left-right wheel drive force distribution control apparatus for a vehicle. The proposed technology relates to a transient control of a left-right wheel drive force distribution that accomplishes a target behavior change (typically a change of yaw rate) corresponding to a change of a vehicle operating state. The left-right wheel drive force distribution is controlled according to a steering speed imposed by a driver such that the difference between the drive forces of the left and right wheels is larger when the steering speed is high. As a result, a transient response can be improved during high-speed steering.

### PRIOR ART DOCUMENTS

### PATENT DOCUMENTS

Patent Document 1: Japanese Patent No. 3116685

### DISCLOSURE OF THE INVENTION

### OBJECT OF THE INVENTION TO BE ACHIEVED

However, it is known that although the gain of the vehicle behavior (yaw rate) with respect to the steering speed is different depending on the vehicle speed, substantially the same gain is maintained in a region of low steering speeds. When the steering speed becomes equal to or higher than a certain steering speed, a steering frequency matches a yaw resonance frequency and a yaw moment larger than the yaw moment corresponding to the steering is produced. Consequently, the gain tends to be higher at higher steering speeds than at low steering speeds.

However, the conventional left-right wheel drive force distribution transient control technology is configured to set the left-right wheel drive force distribution such that the drive force difference between the left and right wheels increases as the steering speed increases. Consequently, when the steering speed is high such that the gain of the vehicle behavior (yaw rate) with respect to the steering speed is high, the transient control of the left-right wheel drive force distribution becomes excessive and the yaw rate becomes larger than necessary. As a result, the vehicle behavior becomes unstable and the drivability degrades.

The present invention takes into account the fact that the gain of the vehicle behavior increases when the steering speed is high and its object is to provide a vehicle left-right wheel drive force control device that can solve the previously explained problem of degraded drivability by weakening the transient control of the left-right wheel drive force distribution when the steering speed is high such that an unnecessarily large yaw rate does not occur when the steering speed is high and, thus, the vehicle behavior is stabilized.

### MEANS FOR ACHIEVING THE OBJECT

In order to achieve the aforementioned object, the vehicle left-right wheel drive force distribution control apparatus according to the present invention is a vehicle left-right wheel drive force distribution control apparatus that executes distributed output of a wheel drive force to left and right drive wheels in accordance with a control. The device is provided with a left-right drive force difference transient control amount computing means that computes a transient control amount of a left-right drive force difference based on a transient control amount of a left-right drive force difference based on a transient turning response request of a driver.
The left-right drive force difference control amount computing means has a direction change operation speed information detecting means that detects information related to a speed of a direction change operation that causes a direction change of the vehicle. While the direction change operation speed information detected by the direction change operation speed information detecting means indicates that the direction change operation speed is equal to or larger than a set speed, the left-right drive force difference control amount computing means revises the left-right drive force difference transient control amount to a decreased value and contributes the decreased control amount to the left-right wheel drive force distribution control.

### EFFECT OF THE INVENTION

The left-right wheel drive force distribution control apparatus explained above does not use the left-right drive force difference transient control amount calculated based on the transient turning response request of the driver as is in the left-right wheel drive force distribution control. Instead, while the direction change operation speed information (which is related to a speed of a direction change operation that causes a direction change of the vehicle) indicates that the direction change operation speed is equal to or larger than a set speed, the device revises the left-right drive force difference transient control amount to a decreased value and contributes the decreased control amount in the left-right wheel drive force distribution control. As a result, the effects explained below are obtained

If the left-right drive force difference transient control amount calculated based on the transient turning response request of the driver is used *as is* in the left-right wheel drive force distribution control, then the behavior gain of the vehicle will be high when the direction change operation speed is fast and the transient control amount of the left-right wheel drive force distribution will become excessively large. Consequently, the behavior of the vehicle will become unstable and the drivability will degrade.

However, with the present invention, when the direction change operation speed is fast, the transient control amount of the left-right drive force difference calculated based on the transient turning response request of the driver is revised to a decreased value before being contributed to the left-right wheel drive force control.
Thus, an unnecessarily large yaw rate will not occur when the direction change operation speed is fast. As a result, the problem of the vehicle behavior becoming unstable and the drivability degrading can be solved.

### BRIEF DESCRIPTION OF THE DRAWINGS

[FIG. 1] is a schematic plan view showing a wheel drive train of a four-wheel drive vehicle equipped with a left-right wheel drive force distribution control apparatus according to an embodiment of the present invention as viewed from above the vehicle. A four-wheel drive control system is also shown.
[FIG. 2] is a function-specific block diagram of the four-wheel drive controller shown in FIG. 1.
[FIG. 3] is a function-specific block diagram of the transient control computing section shown in FIG. 2.
[FIG. 4] is a characteristic curve diagram showing an example of a change characteristic of a left-right drive force difference transient control gain used by the transient control computing section shown in FIG. 2.
[FIG. 5] is a characteristic curve diagram showing a yaw rate gain versus vehicle steering frequency characteristic.
[FIG. 6] is a flowchart showing a process by which the left-right rear wheel target drive force computing section shown in FIG. 2 computes left and right rear wheel target drive forces.

### DESCRIPTION OF THE REFERENCE NUMBERS

- 1L, 1R:: left and right front wheels (left and right main drive wheels)
- 2L, 2R:: left and right rear wheels (left and right subordinate drive wheels)
- 3:: engine
- 4: transmission (transaxle)
- 5L, 5R: left and right front wheel axle shafts
- 6: transfer case
- 7: propeller shaft
- 8: left and right rear wheel drive force distributing unit
- 9L, 9R: left and right rear wheel axle shafts
- 10: center shaft
- 11L: left rear wheel clutch (left subordinate drive wheel clutch)
- 11R: right rear wheel clutch (right subordinate drive wheel clutch)
- 12: final reduction gear
- 21: four-wheel drive controller
- 22: wheel velocity sensor
- 23: accelerator opening degree sensor
- 24: steering angle sensor
- 25: transmission output rotation sensor
- 26: engine rotation sensor
- 27: yaw rate sensor
- 28: longitudinal acceleration sensor
- 29: lateral acceleration sensor
- 31: input signal processing section
- 32: rear wheel total drive force computing section
- 33: left-right rear wheel drive force difference computing section
- 33a: normal control computing section
- 33b: transient control computing section
- 34: feedback control section
- 35: left-right rear wheel target drive force computing section
- 41: target yaw rate computing section (target behavior rate change computing means: direction change operation speed information detecting means)
- 42: differentiator (target behavior change rate computing means: direction change operation speed information detecting means)
- 43: left-right drive force difference transient control computation value calculating section (left-right drive force difference transient control amount computing means)
- 45: left-right drive force difference transient control gain computing section (left-right drive force difference transient control amount computing means)

### PREFERRED EMBODIMENTS OF THE INVENTION

Embodiments of the present invention are described in detail below with reference to the embodiments in the drawings.

### First embodiment

### <Constituent Features>

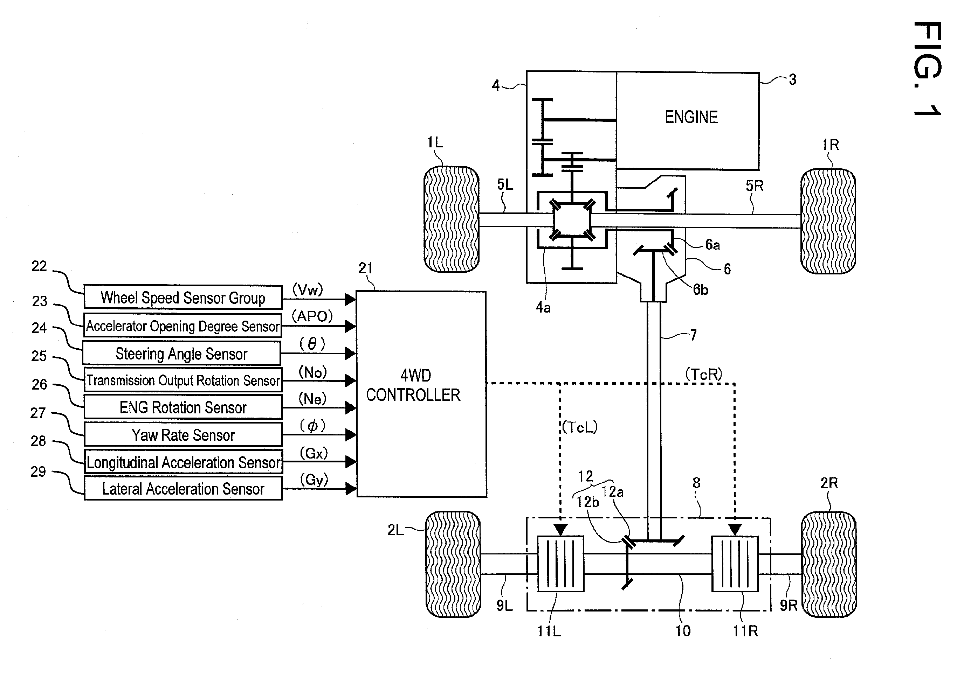

FIG. 1 is a schematic plan view showing a wheel drive train of a four-wheel drive vehicle equipped with a left-right wheel drive force distribution control apparatus according to an embodiment of the present invention as viewed from above the vehicle. A four-wheel drive control system is also shown. The figure shows left and right front wheels 1L and 1R serving as main drive wheels and left and right rear wheels 2L and 2R serving as subordinate drive wheels. In this patent specification, the term "drive force" refers not to power but to a torque value.

The reference numeral 3 indicates an engine serving as a prime mover. Torque from the engine 3 is multiplied by a transmission 4 (transaxle that includes a differential gear device 4a) and transferred toward the left and right front wheels 1L and 1R through left and right axle shafts 5L and 5R, thereby serving to drive the left and right front wheels 1L and 1R.

A portion of the drive force exiting the transmission 4 and heading toward the left and right front wheels 1L and 1R is redirected toward the left and right rear wheels 2L and 2R by a transfer case 6. A drive train used to accomplish this redirection will now be explained.

The transfer case 6 has a bevel gear set comprising an input hypoid gear 6a and an output hypoid gear 6b. The input hypoid gear 6a is coupled to a differential gear case serving as an input rotary member of the differential gear device 4a such that the input hypoid gear rotates together with the differential gear case. The output hypoid gear 6b is coupled to a front end of the propeller shaft 7, and the propeller shaft 7 is arranged to extend rearward toward a left-right rear wheel drive force distributing unit 8.

The transfer case 6 sets a gear ratio of the bevel gear set comprising the hypoid gear 6a and the output hypoid gear 6b such that a portion of a drive force heading toward the left and right front wheels 1L and 1R is converted to a higher rotational speed and outputted toward the propeller shaft 7.

The high-speed rotational power outputted to the propeller shaft 7 is distributed to the left and right rear wheels 2L and 2R by the left-right rear wheel drive force distributing unit 8 in accordance with a control explained later. The left-right rear wheel drive force distributing unit 8 has a center shaft 10 that is arranged between the axle shafts 9L and 9R of the left and right rear wheels 2L and 2R and extends along the axial direction of the shafts 9L and 9R. The left-right rear wheel drive force distributing unit 8 also has a left rear wheel clutch (left subordinate drive wheel friction element) 11L and a right rear wheel clutch (right subordinate drive wheel friction element) 11R. The left rear wheel clutch 11L is arranged between the center shaft 10 and the left rear wheel axle shaft 9L and serves to control a connection between the shafts 10 and 9L. The right rear wheel clutch 11R is arranged between the center shaft 10 and the right rear wheel axle shaft 9R and serves to control a connection between the shafts 10 and 9R.

A bevel gear type final reduction gear 12 provides a drive connection between the center shaft 10 and a rearward end of the propeller shaft 7 extending rearward from the transfer case 6. The final reduction gear 12 comprises an input hypoid gear 12a and an output hypoid gear 12b.

The reduction gear ratio of the final reduction gear 12 is set in relation to the speed-increasing gear ratio of the transfer case 6 (speed increasing gear ratio resulting from the bevel gear set comprising the hypoid gear 6a and the output hypoid gear 6b) to such a gear ratio that the portion of the drive force heading toward the left and right front wheels 1L and 1R that is redirected toward the center shaft 10 is delivered to the center shaft 10 with an increased rotational speed. In this embodiment, a total gear ratio of the transfer case 6 and the final reduction gear 12 is set such that a rotational speed of the center shaft 10 is increased with respect to the left and right front wheels 1L and 1R.

The reason for setting the total gear ratio of the transfer case 6 and the final reduction gear 12 in this way will now be explained. If the rotational speed of the center shaft 10 is not increased, then whichever of the left and right rear wheels 2L and 2R is the outside rear wheel during the turn will rotate at a higher rotational speed than the center shaft 10. Under such conditions, if the clutch 11L (or 11R) corresponding to the rear wheel 2L (or 2R) located on the outside of the turn is engaged, then the high rotational speed of that rear wheel will be dragged down by the more slowly rotating center shaft 10 until the rotational speed decreases to the rotational speed of the center shaft 10. Consequently, the center shaft 10 will not be able to transmit a drive force to the rear wheel 2L (or 2R) located on the outside of the turn and it will not be possible to achieve the intended drive force distribution control. As a result, the four-wheel drive control will not function properly.

Therefore, in order to ensure that during a turn the rotational speed of the center shaft 10 does not fall below the rotational speed of the rear wheel 2L (or 2R) located on the outside of the turn and cause the drive force distribution control to be ineffective, the total gear ratio of the transfer case 6 and the final reduction gear 12 is set as explained previously and the center shaft 10 is rotated at an increased rotational speed as explained previously. By rotating the center shaft 10 at an increased rotational speed, the drive force distribution control explained later can be accomplished as intended.

In the wheel drive train of the four-wheel drive vehicle explained above, torque from the engine 3 is multiplied by a gear ratio at the transmission (transaxle) 4 and transferred to the left and right front wheels 1L and 1R, thus driving the left and right front wheels 1L and 1R.

While this is occurring, a portion of the drive force heading toward the left and right front wheels 1L and 1R is transferred successively from the transfer case 6 to the propeller shaft 7, to the final reduction gear 12, and to the center shaft 10 at an increased rotational speed. The holding forces of the clutches 11L and 11R are controlled such that the clutches 11L and 11R slip in accordance with the amount of rotational speed increase while the left and right rear wheels 2L and 2R are driven. Thus, with the left and right front wheels 1L and 1R and the left and right rear wheels 2L and 2R driven in this way, the vehicle can be operated in four-wheel drive.

In this four-wheel drive vehicle, it is necessary to control the holding forces of the left rear wheel clutch 11L and the right rear wheel clutch 11R. In order to further the performance of this four-wheel drive vehicle when starting into motion from a stopped condition and when accelerating, the vehicle is further configured such that a front-rear wheel drive force distribution control can be executed by controlling a total holding force of the left wheel clutch 11L and the right wheel clutch 11R. Additionally, in order to improve a turning performance of the vehicle and execute a behavior control such that an actual behavior (actual yaw rate, etc.) of the vehicle matches a target based on an operating state and a traveling condition of the vehicle, a left-right wheel drive force distribution control is executed by controlling the holding forces of the left rear wheel clutch 11L and the right rear wheel clutch 11R.

Therefore, a holding force control system of the left rear wheel clutch 11L and the right rear wheel clutch 11R is configured as will now be explained. Each of the left rear wheel clutch 11L and the right rear wheel clutch 11R is an electromagnetic clutch in which the holding force is determined based on a supplied current. A four-wheel drive (4WD) controller 21 accomplishes the aforementioned front-rear wheel drive force distribution control and left-right wheel drive force distribution control by electronically controlling electric currents supplied to the clutches 11L and 11R such that the holding forces of the clutches 11L and 11R correspond to target drive forces TcL and TcR of the left and right rear wheels 2L and 2R, respectively, which are computed as will be explained later.

In order to compute a target drive force TcL of the left wheel 2L and a target drive force TcR of the right wheel, the four-wheel drive controller 21 receives the following input signals: a signal from a wheel speed sensor group 22 that a wheel speed Vw of each of the wheels 1L, 1R, 2L, and 2R; a signal from an accelerator opening degree sensor 23 that detects an accelerator opening degree APO as an accelerator pedal depression amount; a signal from a steering sensor 24 that detects a steering wheel steering angle *θ* ; a signal from a transmission output rotation sensor 25 that detects a transmission output rotational speed No; a signal from an engine rotation sensor 26 that detects an engine rotational speed Ne; a signal from a yaw rate sensor 27 that detects a yaw rate φ about a vertical axis passing through a center of gravity of the vehicle; a signal from a longitudinal acceleration sensor 28 that detects a longitudinal acceleration Gx of the vehicle; and a lateral acceleration signal 29 that detects a lateral acceleration Gy of the vehicle.

Based on the input information just explained, the four-wheel drive controller 21 computes a left rear wheel target drive force TcL and a right rear wheel target drive TcR to be used for the front-rear wheel drive force distribution control and the left-right wheel drive force distribution control and electronically controls the holding forces (electric currents) of the left rear wheel clutch 11L and the right rear wheel clutch 11R such that the drive forces of the left and right rear wheels 2L and 2R match the target drive forces TcL and TcR.

### <Drive Force Distribution Control>

The front-rear wheel drive force distribution control and the left-right wheel drive force distribution control executed by the four-wheel drive controller 21, i.e., the method of setting the left rear wheel target drive force TcL and the right rear wheel target drive force TcR, will now be explained.

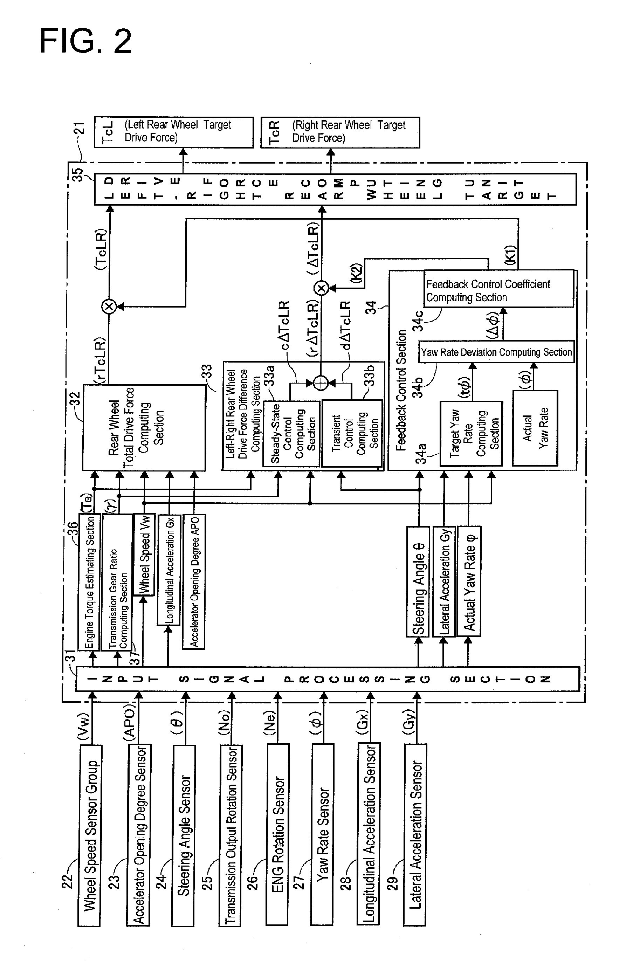

As shown in function-specific block diagram of FIG. 2, the four-wheel drive controller 21 comprises an input signal processing section 31, a rear wheel total drive force computing section 32, a left-right rear wheel drive force difference computing section 33, a feedback control section 34, and a left-right rear wheel target drive force computing section 35.

The input signal processing section 31 removes noise from the detection signals of the wheel speed sensor group 22, the accelerator opening degree sensor 23, the steering angle sensor 24, the transmission output rotation sensor 25, the engine rotation sensor 26, the yaw rate sensor 27, the longitudinal acceleration sensor 28, and the lateral acceleration sensor 29 and pre-processes the signals such that they can be used in computations that will be explained later. Among these pre-processed signals, the engine rotational speed Ne and the accelerator opening degree APO are used by an engine torque estimating section 36 to estimate an engine torque Te, and the engine rotational speed Ne and the transmission output rotational speed No are used by a transmission gear ratio computing section 37 to compute a transmission gear ratio *γ* .

An example of how the rear wheel total drive force computing section 32 computes a total drive force target value rTcLR (hereinafter called "total drive force rTcLR") for the left and right rear wheels 2L and 2R will now be explained. First, the drive force computing section 32 computes an input torque Ti to the differential gear device 4a based on the engine torque Te and the transmission gear ratio *γ* . Next, the computing section 32 calculates left-right front wheel average speed and a left-right rear wheel average speed based on signals (wheel speeds Vw) from the wheel speed sensor group 22 and determines a degree of drive slippage of the left and right front wheels 1L and 1R estimated by comparing the two average speeds. The computing section 32 also determines how much of the input torque Ti to direct toward the left and right rear wheels 2L and 2R in accordance with the degree of drive slippage, the longitudinal acceleration, and the accelerator opening degree APO and sets that amount as a total drive force rTcLR to be directed to the rear wheels.

The larger the aforementioned front wheel slippage is, the larger the total drive force rTcLR to be directed to the rear wheels needs to be in order to suppress the slippage. Meanwhile, the larger the longitudinal acceleration Gx and the accelerator opening degree APO are, the larger the drive force requested by the driver is and the larger the total drive force rTcLR directed to the rear wheels needs to be in order to satisfy the request.

The left-right rear wheel drive force difference computing section 33 has a steady-state control computing section 33a and a transient control computing section 33b and calculates a drive force difference target value r Δ TcLR (hereinafter called drive force difference r Δ TcLR) between the left and right rear wheels 2L and 2R as, for example, will now be explained.

The steady-state control computing section 33a calculates a left-right rear wheel drive force difference steady-state control amount c Δ TcLR for achieving a vehicle turning behavior requested by a driver in a steady manner as will now be explained. The steady-state control computing section 33a estimates a longitudinal acceleration rate Gx of the vehicle based on the engine torque Te and the transmission gear ratio *γ* and a lateral acceleration rate Gy of the vehicle based on a steering angle *θ* and a vehicle speed VSP. An under-steering state (state in which an actual turning behavior is insufficient in relation to a target turning behavior) can be ascertained based on a combination of the estimated longitudinal acceleration rate Gx and the lateral acceleration rate Gy. The steady-state control computing section 33a determines a left-right rear wheel drive force difference necessary to resolve the under-steering state as a left-right rear wheel drive force steady-state control amount c Δ TcLR. The reason estimated values of the longitudinal acceleration rate Gx and the lateral acceleration rate Gy are used instead of detected values is that the steady-state control computing section 33a is a feed forward control system and an estimated value matches the actual state of the control better than a detected value, which is a result value.

Thus, while the steering angle *θ* is near 0 (while the wheels are not being turned), the left-right rear wheel drive force difference steady-state control amount c Δ TcLR is held at 0 because the lateral acceleration rate Gy equals 0. Conversely, while the steering angle *θ* is not near 0 (while the wheels are being turned), the lateral acceleration rate Gy increases as the steering angle *θ* and the vehicle speed VSP increase and there is a strong tendency for the vehicle to experience under-steering. Consequently, the left-right rear wheel drive force difference steady-state control amount c Δ TcLR increases. Furthermore, as the longitudinal acceleration rate Gx increases, the tendency for the vehicle to experience under-steering strengthens and the left-right rear wheel drive force difference steady-state control amount c Δ TcLR increases.

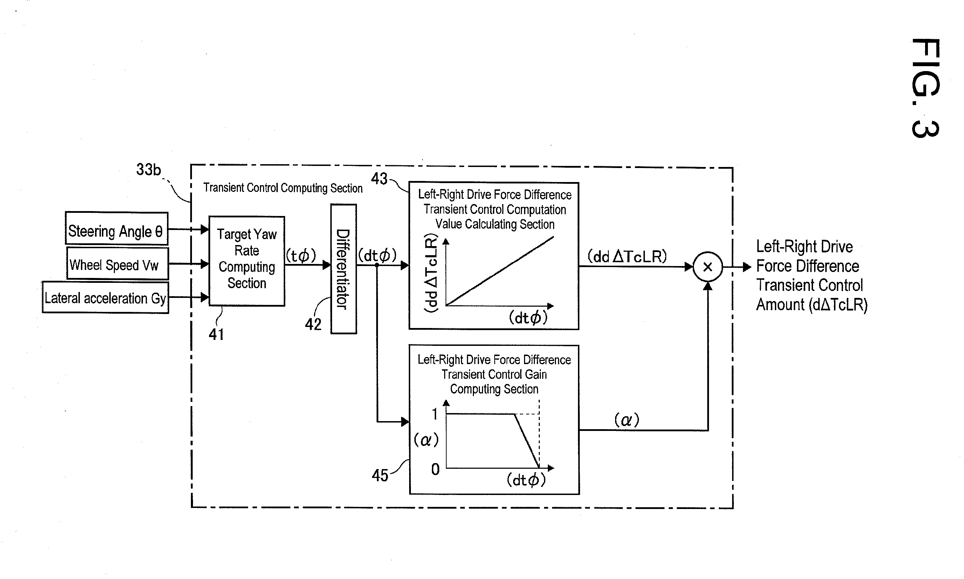

The transient control computing section 33b calculates a left-right rear wheel drive force difference transient control amount d Δ TcLR for achieving a turning response transiently requested by a driver due through the change rate of the steering angle *θ* while traveling at the current wheel speeds Vw (vehicle speed VSP). As shown in FIG. 3, the transient control computing section 33b comprises a target yaw rate computing section 41, a differentiator 42, a left-right drive force difference transient control computation value calculating section 43, and a left-right drive force difference transient control gain computing section 45.

The target yaw rate computing section 41 computes a target yaw rate tφ desired by the driver based on the wheel speeds Vw (vehicle speed VSP) and the steering angle *θ* for the vehicle direction change operation and limits the computed target yaw rate tφ based on the lateral acceleration Gy. The differentiator 42 differentiates the target yaw rate tφ to calculate a change rate dtφ of the target yaw rate (a turning response transiently requested by the driver through a driving operation). Thus, the target yaw rate computing section 41 and the differentiator 42 constitute a target behavior change rate computing means according to the present invention.

The target yaw rate tφ is calculated as previously explained based on the steering angle *θ* for the vehicle direction change operation and includes information related to a direction change operation that causes a direction change of the vehicle. The target yaw rate change rate dtφ includes information related to a speed of the direction change operation. Therefore, the target yaw rate computing section 41 that computes the target yaw rate change rate dtφ and the differentiator 42 constitute the direction change operation speed information detecting means according to the present invention.

Based on the change rate dtφ of the target yaw rate tφ, the left-right drive force difference transient control computation value calculating section 43 executes a map search to find a left-right rear wheel drive force difference transient control computation value dd Δ TcLR to be a basic target value for achieving the turning response transiently requested by the driver. Thus, the left-right drive force difference transient control computation value calculating section 43 constitutes a left-right drive force difference transient control amount computing means according to the present invention. The left-right rear wheel drive force difference transient control computation value dd Δ TcLR is set to be larger when the change rate dtφ of the target yaw rate tφ is higher because a higher turning response is desired when the change rate dtφ is higher. The reason the change rate dtφ of the target yaw rate tφ is used instead of a change rate of a yaw rate detection value φ is that the transient control computing section 33b is a feed forward control system and the target yaw rate tφ (which is an estimated value) matches the actual state of the control better than a detected value φ (which is a result value).

The left-right drive force difference transient control gain computing section 45 serves to set a left-right drive force difference transient control gain *α* . The left-right drive force difference transient control gain *α* is multiplied by the aforementioned left-right rear wheel drive force difference transient control computation value dd Δ TcLR to calculate a left-right rear wheel drive force difference transient control amount d Δ TcLR. Thus, the left-right drive force difference transient control gain computing section 45 and the left-right drive force difference transient control computation value calculating section 43 together constitute a left-right drive force difference transient control amount computing means according to the present invention.

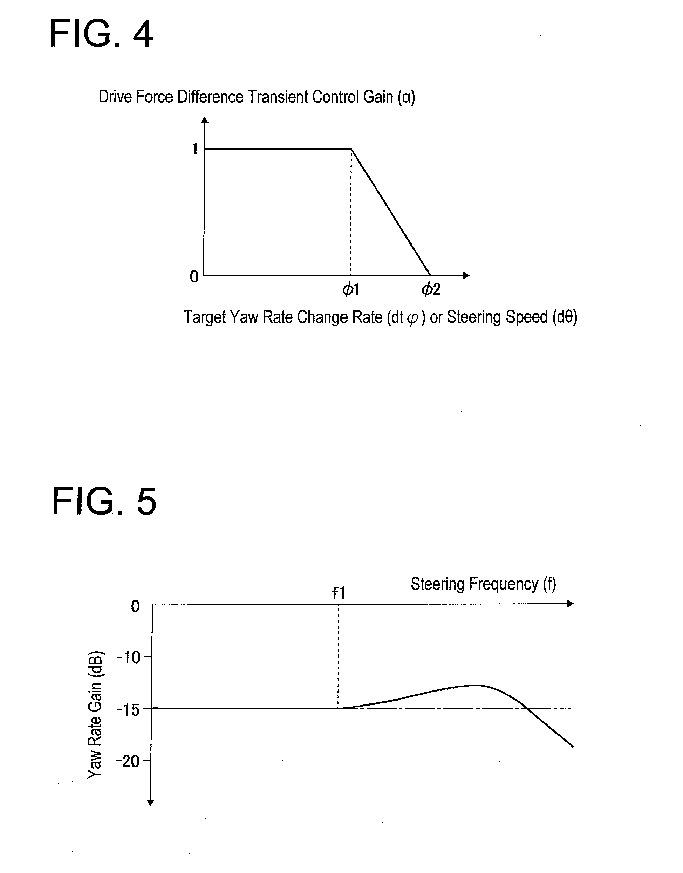

The left-right drive force difference transient gain computing section 45 searches, for example, the map shown in FIG. 4 to find the left-right drive force difference transient control gain *α* based on the change rate dtφ of the target yaw rate tφ. The left-right drive force difference transient control gain *α* is a positive value that varies between 0 and 1 in accordance with the change rate dtφ of the target yaw rate tφ. In a high target-yaw-rate-change-rate region where the change rate dtφ of the target yaw rate tφ is equal to or larger than φ1, the control gain *α* decreases as the change rate dt α of the target yaw rate t φ increases. Meanwhile, the control gain *α* becomes 0 when dtφ = φ2 and maintains a value of 1 in a low target-yaw-rate-change-rate region where dtφ < φ1.

The high target-yaw-rate-change-rate region where dt Φ ≥ Φ 1 will now be explained. As exemplified in FIG. 5, although the gain of the vehicle behavior (yaw rate) with respect to the steering frequency f (steering speed) varies depending on the vehicle speed VSP, at any particular vehicle speed VSP the yaw rate gain is substantially constant when the steering frequency f is in a low region (low speed steering) where it is smaller than a steering frequency f1. Meanwhile, when high speed steering occurs, i.e., the steering frequency is equal to or larger than f1 (but within a range of practical steering speeds), the steering frequency f matches a yaw resonance frequency of the vehicle and a yaw moment larger than the yaw moment corresponding to the steering occurs. Thus, during high speed steering, the yaw rate gain tends to be higher than in the low frequency region (than during low speed steering).

As explained previously, the left-right rear wheel drive force difference transient control computation value ddΔTcLR increases as the change rate dtΦ of the target yaw rate t Φ increases so as respond to the high steering response request. If the computing section 43 used the same value as the drive force difference transient control amount dΔTcLR for the transient control of drive force difference between the left and right wheels, then the transient control of the left-right wheel drive force distribution would become excessive in a high frequency region (high speed steering) where the steering frequency is equal to or larger than fl, i.e., in a region of frequencies higher than a low frequency region (low speed steering) where the steering frequency is smaller than f1. Consequently, a problem would exist in that the yaw rate would become larger than necessary, the vehicle behavior would become unstable, and the drivability would degrade in the high steering frequency region.

The left-right drive force difference transient control gain *α* is employed to solve this problem. Thus, the high target yaw rate change rate region of FIG. 4 where dt Φ ≥ Φ 1 and the left-right drive force difference transient control gain *α* is set to be *α* < 1 corresponds to the high frequency region (high speed steering region) of FIG. 5 where the steering frequency is equal to or larger than f1.

As shown in FIG. 3, the transient control computing section 33b multiplies the left-right drive force difference transient control gain *α* by the left-right rear wheel drive force difference transient control computation value dd Δ TcLR to calculate the left-right rear wheel drive force difference transient control amount d Δ TcLR. Thus, the left-right rear wheel drive force difference transient control amount d Δ TcLR is equivalent to a value obtained by reducing the left-right rear wheel drive force difference transient control computation value dd Δ TcLR (which is a basic target value for achieving the turning response requested by the driver) according to the gain *α* .

As shown in FIG. 4, the left-right drive force difference transient control gain *α* is set to 1 in a low to medium yaw rate change rate region where the change rate dt Φ < Φ 1, gradually decreases from 1 as the target yaw rate change rate dt Φ increases in a high target yaw rate change rate region where dt Φ ≥ Φ 1, and is set to 0 when dt Φ > Φ2. Consequently, the left-right rear wheel drive force difference transient control amount dΔTcLR is set to the same value as the left-right rear wheel drive force difference transient control computation value ddΔTcLR in the low to medium yaw rate change rate region where the change rate dt Φ < Φ 1, gradually decreases from the value that would be obtained in the low to medium yaw rate change rate region where the change rate dt Φ < Φ 1 as the target yaw rate change rate dt Φ increases in the high target yaw rate change rate region where dt Φ ≥ Φ 1, and is set to 0 when dt Φ ≥ Φ.

The left-right rear wheel drive force difference computing section 33 calculates a sum value of the left-right rear wheel drive force difference steady-state control amount c Δ TcLR calculated by the steady-state control computing section 33a as explained previously and the left-right rear wheel drive force difference transient control amount d Δ TcLR calculated by the transient control computing section 33b as explained previously and sets the sum value as a left-right rear wheel drive force difference r Δ TcLR to serve as a target during the vehicle turning behavior.

However, there are situations in which the actual turning behavior (actual yaw rate φ) actually exhibited by the vehicle in response to the left-right rear wheel drive force difference r Δ TcLR is affected by a lateral wind or other external disturbance and does not match the target turning behavior (target yaw rate tφ) requested through the steering operation performed by the driver. When the actual yaw rate φ and the target yaw rate tφ do not match, the feedback control section 34 revises the rear wheel total drive force rTcLR and the rear wheel drive force difference r Δ TcLR as explained below such that a final rear wheel total drive force TcLR and rear wheel drive force difference Δ TcLR are obtained.

The feedback control section 34 has a target yaw rate computing section 34a, a yaw rate deviation computing section 34b, and a feedback control coefficient computing section 34c. The target yaw rate computing section 34a computes a target yaw rate tφ desired by the driver based on the steering angle *θ* , the lateral acceleration Gy, and the vehicle speed VSP (which is calculated based on the wheel speeds Vw). The yaw rate deviation computing section 34b computes a yaw rate deviation A φ (= φ - tφ) between the target yaw rate tφ and a detected actual yaw rate φ.

Based on the yaw rate deviation Δ φ, the feedback control coefficient computing section 34c determines if the vehicle is in an over-steered state in which the actual yaw rate φ exceeds the target yaw rate tφ beyond a dead band, in an under-steered state in which the actual yaw rate φ is insufficient with respect to the target yaw rate tφ beyond a dead zone, or in a neutral steering state in which the actual yaw rate φ is within dead zones in front of and behind the target yaw rate tφ. Based on this determination result, the feedback control coefficient computing section 34c sets a feedback control coefficient K1 (0 or 1) for the rear wheel total drive force rTcLR and a feedback control coefficient K2 (0 or 1) for the rear wheel drive force difference r Δ TcLR.

The feedback control coefficient K1 is multiplied by the rear wheel total drive force rTcLR to calculate a revised final rear wheel total drive force TcLR, and the feedback control coefficient K2 is multiplied by the rear wheel drive force difference rΔTcLR to calculate a revised final rear wheel drive force difference ΔTcLR.

Regarding setting the feedback control coefficients K1 and K2, if the feedback control coefficient computing section 34c determines that the vehicle is in an over-steered state (Φ > tΦ + dead band), then it sets the feedback control coefficient K1 for the rear wheel total drive force rTcLR to 0 and sets the feedback control coefficient K2 for the rear wheel drive force difference rΔTcLR to 0 in order to eliminate harmful effects caused by four-wheel drive travel. Setting the feedback control coefficient K1 to 0 causes the revised final rear wheel total drive force TcLR to be 0, and setting the feedback control coefficient K2 to 0 causes the revised final rear wheel drive force difference rΔTcLR to be 0. This means the vehicle travels in two-wheel drive and, as a result, the harmful effects that could result from traveling in four-wheel drive while in an over-steered state can be eliminated.

If the feedback control coefficient computing section 34c determines that the vehicle is in an under-steered state (Φ < tΦ - dead band), then, although there are no harmful effects caused by four-wheel drive travel, the feedback control coefficient computing section 34c sets the feedback control coefficient K1 for the rear wheel total drive force rTcLR to 1 and sets the feedback control coefficient K2 for the rear wheel drive force difference rΔTcLR to 0 in order to eliminate harmful effects caused by setting a drive force difference between the left and right rear wheels. Setting the feedback control coefficient K1 to 1 causes the revised final rear wheel total drive force TcLR to be set as TcLR = rTcLR, and setting the feedback control coefficient K2 to 0 causes the revised final rear wheel drive force difference rΔTcLR to be 0. This means that the vehicle is operated in four-wheel drive but a drive force difference is not set between the left and right rear wheels. As a result, excellent traction can be enjoyed by operating in four-wheel drive while in an under-steered state while eliminating the harmful effects of setting a drive force difference between the left and right rear wheels.

If the feedback control coefficient computing section 34c determines that the vehicle is in a neutral steering state (tΦ - dead band < Φ < tΦ + dead band), then the feedback control coefficient computing section 34c sets the feedback control coefficient K1 for the rear wheel total drive force rTcLR to 1 and sets the feedback control coefficient K2 for the rear wheel drive force difference rΔTcLR to 1 because there are no harmful effects caused by four-wheel drive travel and no harmful effects caused by setting a drive force difference between the left and right rear wheels. Setting the feedback control coefficient K1 to 1 causes the revised final rear wheel total drive force TcLR to be set as TcLR = rTcLR, and setting the feedback control coefficient K2 to 1 causes the revised final rear wheel drive force difference rΔTcLR to be set as rΔTcLR = rΔTcLR. This means that the vehicle is operated in four-wheel drive and a drive force difference is set between the left and right rear wheels.

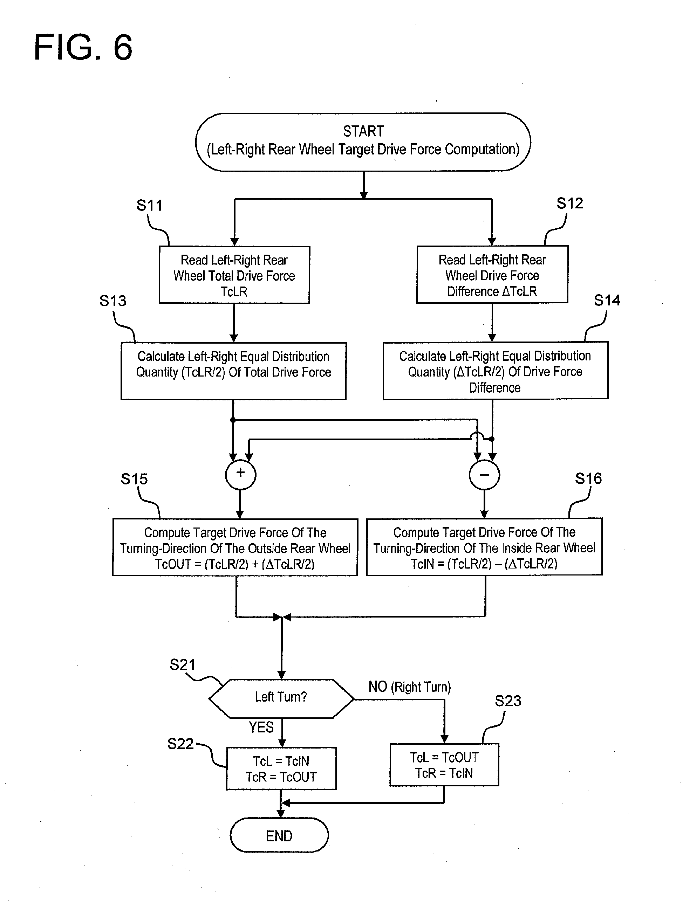

Based on the process shown in FIG. 6, the left-right rear wheel target drive force computing section 35 calculates a left rear wheel target drive force TcL and a right rear wheel target drive force TcR that satisfy both the left-right rear wheel total drive force TcLR and the left-right rear wheel drive force difference ΔTcLR, which are to be the revised final targets.

In step S11, the left-right rear wheel target drive force computing section 35 reads the final rear wheel total drive force TcLR revised by the previously explained feedback control, and in step S12, the left-right rear wheel target drive force computing section 35 reads the final left-right rear wheel drive force difference ΔTcLR revised by the feedback control.

In step S13, the left-right rear wheel target drive force computing section 35 calculates a left-right equal distribution quantity TcLR/2 of the rear wheel total drive force TcLR read in step S11, and in step S 14, the left-right rear wheel target drive force computing section 35 calculates a left-right equal distribution quantity ΔTcLR/2 of the rear wheel drive force difference rΔTcLR read in step S12. In step S 15, the left-right rear wheel target drive force computing section 35 adds the rear wheel drive force difference left-right equal distribution quantity ΔTcLR/2 to the rear wheel total drive force left-right equal distribution quantity TcLR/2 to calculate a target drive force TcOUT (= TcLR/2 + ΔTcLR/2) of the turning-direction outside rear wheel. In step S16, the left-right rear wheel target drive force computing section 35 subtracts the rear wheel drive force difference left-right equal distribution quantity ΔTcLR/2 from the rear wheel total drive force left-right equal distribution quantity TcLR/2 to calculate a target drive force TcIN (= TcLR/2 - ΔTcLR/2) of the turning-direction inside rear wheel.

Thus calculated, the target drive force TcOUT of the turning-direction outside rear wheel and the target drive force TcIN of the turning-direction inside rear wheel serve as a target drive force of the turning-direction outside rear wheel and a target drive force of the turning-direction inside rear wheel that achieve both the rear wheel total drive force TcLR and the rear wheel drive force difference ΔTcLR.

In step S21 and subsequent steps, the left-right rear wheel target drive force computing section 35 sets the left rear wheel target drive force TcL and the right rear wheel target drive force TcR based on the target drive force TcOUT of the turning-direction outside rear wheel and the target drive force TcIN of the turning-direction inside rear wheel as will now be explained. First, in step S21, the left-right rear wheel target drive force computing section 35 determines if the vehicle is undergoing a left turn or a right turn based on the steering angle *θ* and the yaw rate Φ.

If it is a left turn, then in step S22 the left-right rear wheel target drive force computing section 35 sets the inside wheel target drive force TcIN as the target drive force TcL of the left rear wheel (which is the turning-direction inside wheel) and sets the outside wheel target drive force TcOUT as the target drive force TcR of the right rear wheel (which is the turning-direction outside wheel). Conversely, if it is a right turn, then in step S23 the left-right rear wheel target drive force computing section 35 sets the outside wheel target drive force TcOUT as the target drive force TcL of the left rear wheel (which is the turning-direction outside wheel) and sets the inside wheel target drive force TcIN as the target drive force TcR of the right rear wheel (which is the turning-direction inside wheel).

The four-wheel drive controller 21 shown in FIG. 1 controls electric currents supplied to the left rear wheel clutch 11L and the right rear wheel clutch 11R such that the holding forces of the left rear wheel clutch 11L and the right rear wheel clutch 11R correspond to the left wheel target drive force TcL and the right rear wheel target drive force TcR set by the computing section 35 shown in FIG. 2 as explained previously.

### <EFFECTS>

Effects that are obtained with a left-right wheel (left and right rear wheels) drive force distribution control for a vehicle according to the embodiment explained heretofore will now be explained.
(1) The transient control computing section 33b is configured as explained previously with reference to FIG. 3. Based on the change rate dt Φ of the target yaw rate tΦ, the left-right drive force difference transient control computation value calculating section 43 finds the left-right rear wheel drive force difference transient control computation value ddΔTcLR, which is a basic target value for achieving the turning response transiently requested by the driver in terms of steering speed (direction change operation speed) at the current wheel speeds Vw (vehicle speed VSP). The left-right drive force difference transient control gain computing section 45 finds the left-right drive force difference transient control gain *α* in accordance with the change rate dtΦ of the target yaw rate tΦ, i.e., finds the left-right drive force difference transient control gain *α* such that it has a value smaller than 1 in the high target yaw rate change rate region exemplified in FIG. 4 where dt Φ ≥ Φ 1. The transient control computing section 33b then multiplies the left-right rear wheel drive force difference transient control computation value ddΔTcLR by the left-right drive force difference transient control gain *α* to calculate the left-right rear wheel drive force difference transient control amount dΔTcLR and contributes the same to the left-right wheel (left and right rear wheels) drive force distribution control.

With this embodiment, in the high target yaw rate change rate region where dt Φ > Φ 1 (when high speed steering is occurring), the left-right rear wheel drive force difference transient control amount dΔTcLR is decreased by setting *α* < 1 and the transient control of the left-right wheel (left and right rear wheels) distribution is weakened. Thus, as explained previously with reference to FIG. 5, in the high target yaw rate change rate region where dt Φ ≥ Φ 1 (when high speed steering is occurring), the transient control quantity of the left-right drive force distribution can be prevented from becoming excessive even if the yaw rate frequency gain becomes high. Thus, an unnecessarily large yaw rate does not occur in the high target yaw rate change rate region (when high-speed steering is occurring), i.e., when high-speed steering is occurring (when a high-speed direction change operation is occurring). As a result, the problem of the vehicle behavior becoming unstable and the drivability degrading can be solved.

(2) Additionally, with this embodiment, when the target yaw rate change rate is in the high region (dtΦ ≥ Φ1) and the left-right drive force difference transient control gain *α* is set to be smaller than 1 as shown in FIG. 4 such that the left-right rear wheel drive force difference transient control amount dΔTcLR is revised to a lower value and the transient control of the left-right wheel (left and right rear wheels) drive force distribution is weakened, the left-right drive force difference transient control gain *α* is decreased gradually from 1 as the target yaw rate change rate dt Φ increases in the high target yaw rate change rate region (dtΦ ≥ Φ1). As a result, the left-right rear wheel drive force difference transient control amount dΔTcLR is revised gradually downward and a shock or an odd feeling can be prevented from accompanying this downward revision.

(3) Also, in this embodiment, since the left-right drive force difference transient control gain *α* is set to 0 in the portion of the high target yaw rate change rate region (dtΦ ≥ Φ 1) where dt Φ ≥ Φ2, the left-right rear wheel drive force difference control amount dΔTcLR is set to 0 in that region and the effects explained in (1) can be obtained more reliably.

(4) Additionally, in this embodiment, as explained previously, the high target yaw rate change rate region (dtΦ ≥ Φ1) of claim 4 (where the left-right drive force difference transient control gain *α* is set to be smaller than 1 such that the left-right rear wheel drive force difference transient control amount dΔTcLR is revised to a lower value) is coordinated with the high frequency region (high-speed steering region) where the steering frequency is equal to or larger than a frequency f1 at which the yaw rate gain increases as shown in FIG. 5. Consequently, the decrease of the left-right rear wheel drive force difference transient control amount dΔTcLR explained previously can be prevented from being executed when unnecessary and not being executed when necessary and the previously explained effects can be achieved without incurring the harmful effects that could otherwise result from the execution or non-execution of the decrease.

### <Other Embodiments>

Although in the previously explained embodiment the left-right drive force difference transient control gain *α* is set according to the target yaw rate change rate dt Φ as shown in FIG. 4, the invention is not limited to this and it is acceptable to set the left-right drive force difference transient control gain based on any other information related to the speed of a direction change operation serving to cause a direction change of the vehicle. For example, as indicated supplementarily on the horizontal axis, it is acceptable to set the left-right drive force difference transient control gain *α* according to the change rate (steering speed) d *θ* of the steering angle.

However, in the example shown in the drawings, it is advantageous in terms of cost to set the left-right drive force difference transient control gain *α* based on the target yaw rate change rate dt Φ because, as shown in FIG. 3, the transient control computing section 33b already has the target yaw rate computing section 41 and the differentiator 42, which serve to find the target yaw rate change rate dt Φ.

In the previously explained embodiment, the target yaw rate computing section 41 and the differentiator 42 of FIG. 3 calculate the change rate dtφ of the yaw rate tφ desired by the driver (turning response transiently requested by the driver through a driving operation) based on the steering angle *θ* and the vehicle speed VSP, and the left-right drive force difference transient control computation value calculating section 43 calculates the left-right rear wheel drive force difference transient control computation value dd Δ TcLR (transient component of the left-right rear wheel drive force difference) for the turning response requested transiently by the driver based on the change rate dtφ of the target yaw rate tφ. However, so long as the left-right rear wheel drive force difference transient control computation value dd Δ TcLR (transient component of the left-right rear wheel drive force difference) is a value corresponding to the transient response request caused by the driver (driving operation), then the same effects can be obtained and the computation value can be calculated based on factors other than the operating angle *θ* and the vehicle speed VSP and using a method other than the method explained above.

## Claims

1. A vehicle left-right wheel drive force distribution control apparatus that executes a distributed output of a wheel drive force to left and right drive wheels in accordance with a control, the left-right wheel drive force distribution control apparatus comprising:
a left-right drive force difference transient control amount computing means that computes a left-right drive force difference transient control amount based on a driver requested transient turning response,
the left-right drive force difference transient control amount computing means including a direction change operation speed information detecting means that detects information related to a speed of a direction change operation that causes a direction change of the vehicle, and being configured such that while the direction change operation speed information detected by the direction change operation speed information detecting means indicates that the direction change operation speed is equal to or larger than a set speed, the left-right drive force difference transient control amount computing means revises the left-right drive force difference transient control amount to a decreased value and contributes the decreased control amount in the left-right wheel drive force distribution control.

2. The vehicle left-right wheel drive force distribution control apparatus according to claim 1, wherein
the direction change operation speed that is equal to or larger than a set speed is a direction change operation speed in a direction change operation speed region where a behavior gain with respect to the direction change operation speed increases.

3. The vehicle left-right wheel drive force distribution control apparatus according to claim 1 or 2, wherein
the direction change operation speed information detecting means detects a steering speed; and
the left-right drive force difference transient control amount computing means revises the left-right drive force difference transient control amount to the decreased value while the detected steering speed is equal to or larger than a set speed.

4. The vehicle left-right wheel drive force distribution control apparatus according to claim 1 or 2, wherein
a target behavior change rate computing means that computes a change rate of a target behavior corresponding to a change of a vehicle operating state is used as the direction change operation speed information detecting means; and
the left-right drive force difference transient control amount computing means revises the left-right drive force difference transient control amount to the decreased value while the target behavior change rate computed by the target behavior change rate computing means is equal to or larger than a set rate.

5. The vehicle left-right wheel drive force distribution control apparatus according to any one of claims 1 to 4, wherein
the left-right drive force difference transient control amount computing means executes revision of the left-right drive force difference transient control amount to the decreased value gradually as the direction change operation speed increases.

6. The vehicle left-right wheel drive force distribution control apparatus according to any one of claims 1 to 5, wherein
the left-right drive force difference transient control amount computing means executes revision of the left-right drive force difference transient control amount to the decreased value such that the left-right drive force difference transient control amount ultimately goes to 0.

7. The vehicle left-right wheel drive force distribution control apparatus according to any one of claims 1 to 6, wherein
a target behavior change rate computing means that computes a change rate of a target behavior corresponding to a change of a vehicle operating state, the driver requested transient turn response being the change rate of the target behavior,
the left-right drive force difference transient control amount computing means computing the left-right drive force difference transient control amount for attaining the target behavior change rate computed by the target behavior change rate computing means, and, while the direction change operation speed information detected by the direction change operation speed information detecting means indicates that the direction change operation speed is equal to or larger than the set speed, the left-right drive force difference transient control amount computing means executes a decreasing revision of the left-right drive force difference transient control amount, which was computed, and contributes the right-left drive force difference transient control amount that was revised to the left-right wheel drive force distribution control.
